# EUROPEAN PATENT SPECIFICATION

(11) **EP 3 477 926 B1**
(45) Date of publication and mention of the grant of the patent: **06.04.2022**
(21) Application number: 17199001.3
(22) Date of filing: 27.10.2017
(51) Int. Cl.: H04M 3/42, H04M 1/57

(54) **COMMUNICATIONS DEVICE AND METHOD FOR REQUESTING CALLER IDENTIFIERS**
KOMMUNIKATIONSVORRICHTUNG UND VERFAHREN ZUR ANFORDERUNG VON ANRUFERKENNZEICHEN
DISPOSITIF DE COMMUNICATION ET PROCÉDÉ DE DEMANDE D'IDENTIFIANTS D'APPELANT

(43) Date of publication of application: 01.05.2019
(73) Proprietor: Vestel Elektronik Sanayi ve Ticaret A.S., 45030 Manisa (TR)
(72) Inventor: ER, Alper Sait, 45030 Manisa (TR); YILDIZ, Kadir, 45030 Manisa (TR)
(74) Representative: Flint, Adam

(56) References cited:
- EP-A1- 2 493 155
- KROLLMAN K ET AL: "DISPLAY END USER ON CELLULAR TELEPHONE (RADIO)", MOTOROLA TECHNICAL DEVELOPMENTS, MOTOROLA INC. SCHAUMBURG, ILLINOIS, US, vol. 38, 1 June 1999 (1999-06-01), page 241, XP000906111, ISSN: 0887-5286

## Description

### Technical Field

The present disclosure relates to a communications device and a method of communication between a calling device and a called device over a communications network, and a computer program therefor.

### Background

When a caller using a calling device, such as a mobile phone, etc., attempts to call a callee using a called device, the called device will alert the callee to the incoming call. This typically involves ringing or vibrating of the called device. The called device typically has a stored address book or the like which contains the names and numbers of saved contacts. During the attempt by the caller to call the callee, if the caller's number is saved in the called device's address book, the caller's name will be displayed on the calling device. If the caller's number is not saved in the called device's address book, however, unless the callee happens to recognise the caller's contact number, the caller does not know the identity of the caller. This tends to result in the callee not answering the call.

Krollman K et al, "Display End User on Cellular Telephone (Radio)", MOTOROLA Technical Developments, Motorola Inc., Schaumburg, Illinois, US, vol. 38, page 241 discloses cellular phones which can display the caller's image. The callee's phone checks to see if the caller's image is in memory. If not, the callee's phone sends a request for the image to the caller's phone.

### Summary

According a first aspect disclosed herein, there is provided a method of communication between a calling device and a called device over a communications network, the method comprising: during an attempt by a caller using a calling device to call a callee using a called device over a communications network and prior to the callee answering the call, the called device determining if an identifier of the caller using the calling device is accessible at the called device; characterised by: if an identifier of the caller using the calling device, other than the telephone number of the calling device, is determined not to be accessible at the called device, transmitting from the called device to the calling device a notification indicating that no identifier of the caller is accessible at the called device; and prior to transmitting the notification from the called device, the called device providing the callee with the option manually to decide whether or not to transmit the notification, and only transmitting the notification from the called device to the calling device if the called device receives an input from the callee that confirms that the notification is to be transmitted.

Here, the "identifier of the caller" does not include the telephone number of the calling device, which typically is displayed on the called device automatically, as mentioned. The "identifier of the caller" is some other indicator, such as a name or nickname for the caller.

In examples, the determining if an identifier of the caller is accessible at the called device comprises searching for an identifier of the caller in a memory of the called device.

In examples, the identifier of the caller is a name or other indicator of the caller of the calling device stored in an address book of the called device.

The "address book", which may be referred to as a contacts list or the like, is typically created and managed by the user of the called device to store contact details for contacts with whom the user of the called device makes frequent contact.

In examples, the notification is editable by the callee using the called device prior to the notification being transmitted.

In examples, the method comprises causing the notification to be displayed on a display of the calling device.

In examples, the method comprises receiving at the called device a message transmitted by the calling device following receipt of the notification at the calling device.

In examples, the method comprises displaying the message on a display of the called device.

In examples, the message to the called device is automatically transmitted by the calling device in response to the notification being received at the calling device.

In examples, the method comprises providing an option for the caller to input on the calling device the message to be transmitted to the called device.

The caller may input a "default" message, which is always automatically transmitted to the called device following receipt at the calling device of the notification. Alternatively or additionally, on receipt of the notification, the calling device may provide the caller with an option to compose a "bespoke" message to be sent to the called device.

In examples, the calling device and/or the called device is a mobile device.

In examples, the communications network is a cellular network.

According to a second aspect disclosed herein, there is provided a computer program comprising instructions such that when the computer program is executed on a computing device, the computing device is arranged to carry out a method according to any of the method steps disclosed herein.

According to a third aspect disclosed herein, there is provided a communications device configured to communicate with a calling device over a communications network, the communications device being configured to: during an attempt by a caller using a calling device to call a callee using a communications device over a communications network and prior to the callee answering the call, determine if an identifier of the caller using the calling device is accessible at the communications device; characterised by the communications device being configured to: if an identifier of the caller using the calling device, other than the telephone number of the calling device, is determined not to be accessible at the communications device, transmit from the communications device to the calling device a notification indicating that no identifier of the caller is accessible at the communications device; and, prior to transmitting the notification from the called device, provide the callee with the option manually to decide whether or not to transmit the notification, and only transmit the notification to the calling device if the communications device receives an input from the callee that confirms that the notification is to be transmitted.

In examples, the communications device is configured to determine if an identifier of the caller is accessible at the communications device by searching for an identifier of the caller in a memory of the communications device.

In examples, an identifier of the caller is a name or other indicator of the caller of the calling device stored in an address book of the communications device.

In examples, the communications device is configured to allow a user of the communications device to edit the notification prior to the notification being transmitted.

In examples, the communications device is a mobile cellular device.

### Brief Description of the Drawings

To assist understanding of the present disclosure and to show how embodiments may be put into effect, reference is made by way of example to the accompanying drawings in which:
Figure 1 shows an example communications network including a calling device and a called device for communicating over the communications network;
Figure 2 shows schematically an example of a called device for communicating with a calling device over a communications network;
Figure 3 shows a flow chart of an example embodiment disclosed herein;
Figure 4a shows an example notification transmitted from a called device to a calling device; and
Figure 4b shows an example message transmitted from a calling device to a called device.

### Detailed Description

Communications devices, such as mobile or cellular phones, including smartphones, etc., allow a user to record and store the names and numbers of known contacts in an address book (or equivalently a contacts list or the like) which is stored in non-volatile data storage of the device. Thanks to the address book, when a user calling from a device whose number is stored in the address book attempts to call the user of the device, the calling user's stored name is displayed on the called device. However, if the calling user's number is not stored in the address book, only the calling number's name is displayed on the called device. Alternatively, a message indicating that the calling number is unknown at the device is displayed on the called device.

Typically, users do not want to answer calls from communications devices having phone numbers that they do not know or recognise. A user may not answer a call from an unknown number for several reasons. For example, the caller may be a telemarketer, a scammer, or an automated call service, or the caller may have dialled the wrong number. Additionally, the called user may feel unprepared to answer a call from an unknown number. Whatever the reason, many users avoid answering calls from unknown numbers.

In examples described herein, if a caller using a calling device attempts to call a callee using a called device, during the attempt (and prior to the callee answering the call), if the caller's name and number are not stored, e.g. in an address book or contact list of the called device, the called device transmits a notification to the calling device indicating that the calling device does not recognise the calling device's number. Put simply, the called device informs the calling device that the caller's number is unknown.

Informing the caller that their number is not stored at the called device provides several advantages. First, the caller is made aware that the callee is unlikely to answer the call. Secondly, the notification may request that the caller make themselves known to the callee via a message. This may be achieved by receipt of the notification at the calling device prompting generation of some option on the calling device for the caller to enter a (text) message. Therefore the caller can send a message, e.g. including their name and/or the purpose of the call, to the called device. The callee, upon seeing the message displayed on their (called) device, may therefore answer a call which otherwise would have gone unanswered.

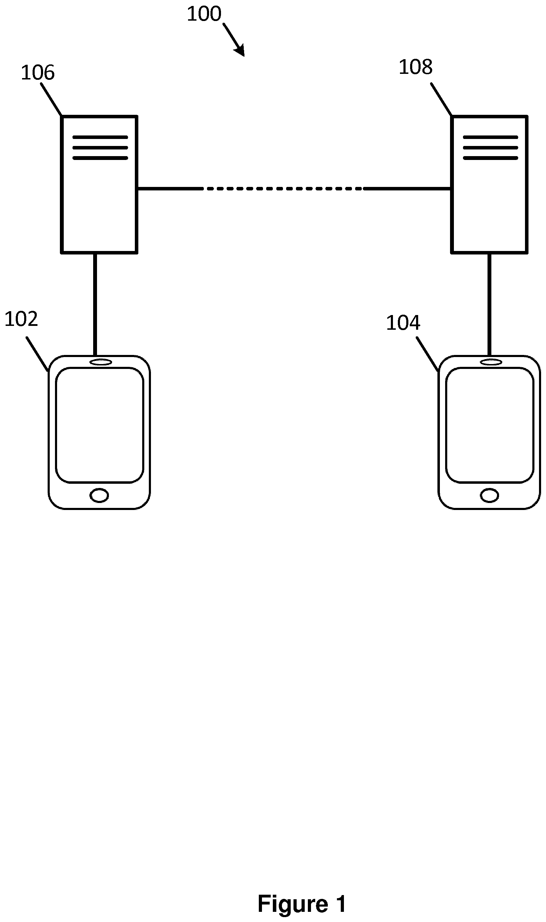

Figure 1 schematically shows an example communications system 100 comprising a calling device 102 and a called device 104 for communicating over a communications network. The calling device 102 and called device 104 are examples of a communications device.

As used in this specification, a communications device may include but is not limited to the following: (a) wired and wireless telephones, (b) satellite telephones, (c) personal communication devices, or (d) other types of mobile devices or terminals. A communications device may also refer to a mobile device including mobile or cell phones (including so-called "smart phones"), personal digital assistants, pagers, tablet and laptop computers, content-consumption or generation devices (for music and/or video for example), etc.

The calling device 102 and called device 104 may communicate over a communications network. The communications network may be for example a cellular network, configured in accordance with for example Long Term Evolution (LTE), or some other mobile access mechanism such as wideband code-division multiple access (W-CDMA), CDMA2000, global system for mobile communications (GSM), general packet radio service (GPRS), LTE-Advanced (LTE-A) and/or the like. The calling device 102 may connect to the communications network via a base station 106. Similarly, the called device 104 may connect to the communications network via a base station 108.

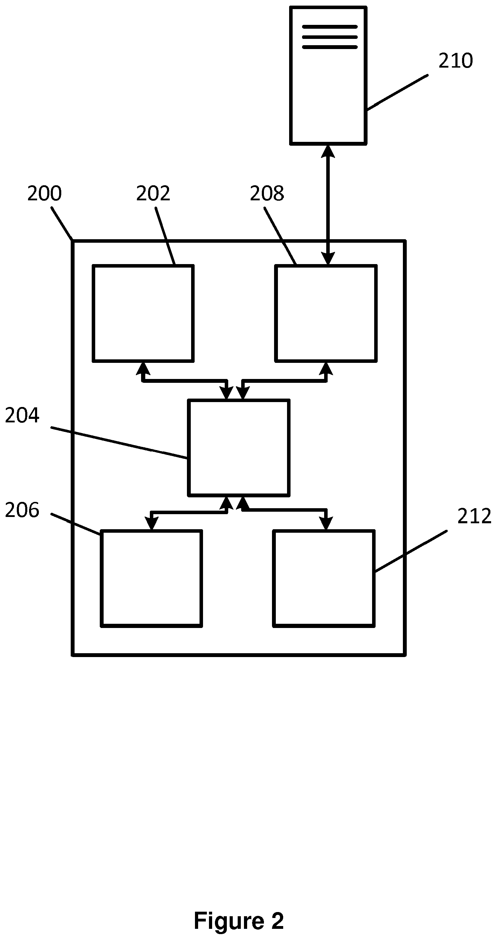

Figure 2 shows schematically an example called device 200 (i.e. an example communications device). The called device contains the necessary radio module 202, processor(s) 204 and memory/memories 206, antenna 208, etc. to enable (wireless) communication with the communications network, e.g. via a base station 210. The called device 200 also has certain other components 212, e.g. a user interface, a microphone and a speaker.

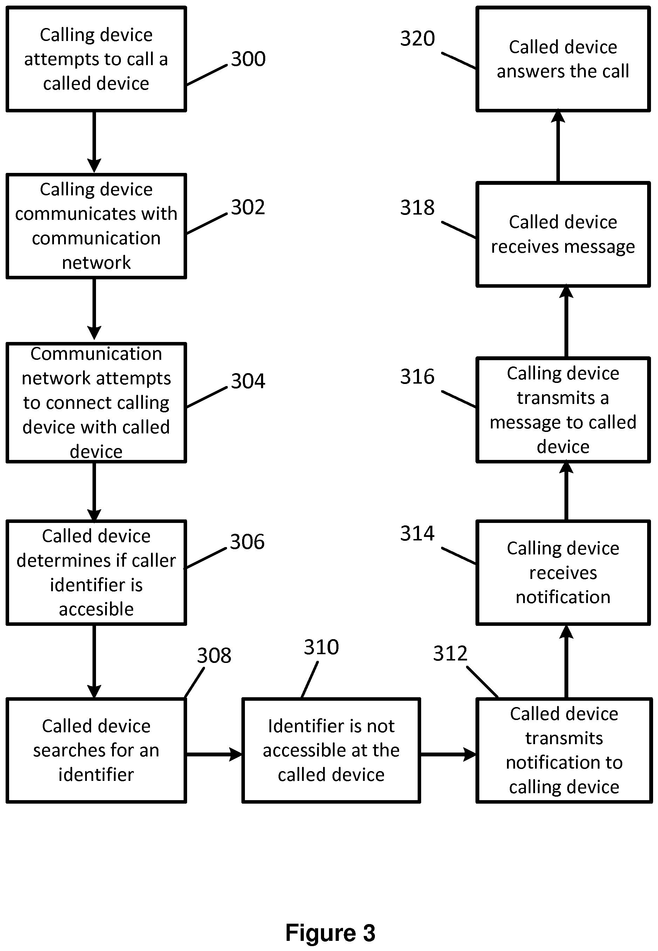

Figure 3 shows a flowchart of an example implementation of the method according to aspects described herein. At Step 300 a caller using a calling device attempts to call a callee using called device over a communications network.

At Step 302, the calling device 102 communicates with the communication network, e.g. via a base station 106.

At Step 304, the communication network informs the called device 104 that the called device 102 is attempting to call the called device 104.

As Step 306, during the attempt by the caller and before the callee answers the call, the called device 104 determines if an identifier of the caller using the calling device 102 is accessible at the called device 104. Here, the "identifier of the caller" does not include the telephone number of the calling device 102, which typically is displayed on the called device 104 automatically. The "identifier of the caller" is some other indicator, such as a name or nickname for the caller. The identifier may also include a picture (photograph or otherwise) representing the caller. The identifier of the caller is typically defined by the callee, attributed to the caller's number and stored at the called device 104.

At Step 308, the called device 104 may determine if an identifier of the caller is accessible at the called device 104 by searching for an identifier of the caller in a memory of the called device 104. The address book and the identifiers it contains may be stored at the called device 104. Additionally or alternatively, the identifier may be stored remotely and accessible via a wireless connection between the called device 104 and the remote storage.

In examples, the identifier may be stored in an address book (e.g. a contacts list or the like) which is stored in non-volatile data storage of the called device 104 or a remotely accessible address book. For example, the called device 104 may be synchronised with an address book stored on a different device of the callee. The address book is typically created and managed by the user of the called device 104 to store contact details for contacts with whom the user of the called device 104 makes frequent contact.

At Step 310, an identifier of the caller using the calling device 102 is determined not to be accessible at the called device 104.

At Step 312, the called device 104 transmits to the calling device 102 a notification indicating that an identifier of the caller is not accessible at the called device 104.

The called device 104 provides the user of the called device 104 with the option manually to decide whether or not to transmit the notification. The called device 104 presents the option on a display of the called device 104 and the callee confirms whether or not to transmit the notification.

In examples, the user of the called device 104 may specify particular numbers or types of number to which the notification is not automatically transmitted. For example, the called device 104 may be configured not to automatically transmit notifications to blocked numbers. A number may be manually blocked by the callee if e.g. the number is known to be a telemarketer.

In examples, the notification is editable by the callee using the called device 104 prior to the notification being transmitted. For example, the callee may create a bespoke notification, e.g. requesting the caller to identify them self.

Alternatively, the notification may be a code that, when transmitted to and received by the calling device 102, indicates that an identifier of the caller is not accessible at the called device 104.

At Step 314, the notification is received at the calling device 102.

In examples, the notification is displayed on a display of the calling device 102 when the notification is received at the calling device 102. For example, the caller may view the notification on the display of the calling device 102 during the call attempt. The notification may for example be or appear in the form of a text or SMS (Short Message Service) message. The notification may prompt the caller to provide additional information to the callee before the callee is willing to answer the call.

At Step 316, the calling device 102 transmits a message to the called device 104 over, e.g. over the communications network. For example, the message may contain the name of the caller or any other indicator that informs the callee of the caller's identity.

In examples, the message to the called device 104 is automatically transmitted by the calling device 102 in response to the notification being received at the calling device 102.

In examples, the calling device 102 may provide an option for the caller to input on the calling device 102 the message to be transmitted to the called device 104. The caller may input a "default" message, which is always automatically transmitted to a called device 104 following receipt at the calling device 102 of the notification from a called device 104. Alternatively or additionally, on receipt of the notification, the calling device 102 may provide the caller with an option to compose a "bespoke" message to be sent to the called device 104.

At Step 318, the called device 104 receives the message transmitted by the calling device 102 following receipt of the notification at the calling device 102.

In examples, the message received at the calling device 102 from the called device 104 is displayed on the called device 104.

At Step 320, the callee may use the called device 104 to answer the call. For example, the message received from the calling device 102 may contain information indicating the caller's identify. The callee may then feel comfortable in answering the call from the previously unknown or unrecognised number.

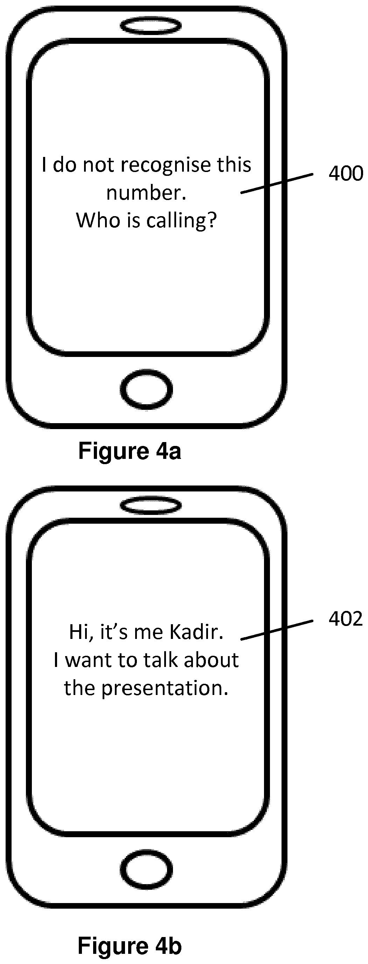

Figure 4a shows an example notification 400 transmitted from the called device 4 to the calling device 102 if the identifier of the caller using the calling device 102 is determined not to be accessible at the called device 104. For example, the callee may edit the notification to recite "I do not recognise this number. Who is calling?" The notification may be made bespoke by the callee. Therefore the caller, on receipt of the notification at the calling device, is made aware that the callee does not recognise the calling number.

Figure 4b shows an example message 402 transmitted from the calling device 102 and received at the called device 104 following receipt of a notification at the calling device 102. For example, the caller may edit the message to recite "Hi, it's me Kadir. I want to talk about the presentation." The message may be made bespoke by the caller. Therefore the callee, on receipt of the message at the called device, is made aware of the identity of the caller and may be better informed on whether or not to answer the call.

It will be understood that the processor referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. The scope of the invention is defined by the appended independent claims. Preferred embodiments are defined by the dependent claims.

## Claims

1. A method of communication between a calling device (102) and a called device (104) over a communications network, the method comprising:
during an attempt by a caller using a calling device (102) to call a callee using a called device (104) over a communications network and prior to the callee answering the call, the called device (104) determining if an identifier of the caller using the calling device (102) is accessible at the called device (104);
if an identifier of the caller using the calling device (102), other than the telephone number of the calling device (102), is determined not to be accessible at the called device (104), transmitting from the called device (104) to the calling device (102) a notification indicating that no identifier of the caller is accessible at the called device (104): **characterized by**
prior to transmitting the notification from the called device (104), the called device (104) providing the callee with the option manually to decide whether or not to transmit the notification, and receiving input from the callee whether or not to transmit the notification to the calling device.

2. A method according to claim 1, wherein the determining if an identifier of the caller is accessible at the called device (104) comprises searching for an identifier of the caller in a memory of the called device (104).

3. A method according claim 1 or claim 2, wherein the notification is editable by the callee using the called device (104) prior to the notification being transmitted.

4. A method according to any of claims 1 to 3, comprising receiving at the called device (104) a message transmitted by the calling device (102) following receipt of the notification at the calling device (102).

5. A method according to claim 4, comprising displaying the message on a display of the called device (104).

6. A method according to claim 4 or claim 5, wherein the message to the called device (104) is automatically transmitted by the calling device (102) in response to the notification being received at the calling device (102).

7. A method according to claim 5 or claim 6, comprising providing an option for the caller to input on the calling device (102) the message to be transmitted to the called device (104).

8. A computer program comprising instructions such that when the computer program is executed on a computing device, the computing device is arranged to carry out a method according to any of claims 1 to 7.

9. A communications device (104) configured to communicate with a calling device (102) over a communications network, the communications device (104) further being configured to:
during an attempt by a caller using a calling device (102) to call a callee using the communications device (104) over a communications network and prior to the callee answering the call, determine if an identifier of the caller using the calling device (102) is accessible at the communications device (104);
if an identifier of the caller using the calling device (102), other than the telephone number of the calling device (102), is determined not to be accessible at the communications device (104), transmit from the communications device (104) to the calling device (102) a notification indicating that no identifier of the caller is accessible at the communications device (104); **characterized in that** the communications device is further configured to,
prior to transmitting the notification from the called device (104), provide the callee with the option manually to decide whether or not to transmit the notification, and receiving input from the callee whether or not to transmit the notification to the calling device.

10. A communications device (104) according to claim 9, the communications device (104) being configured to determine if an identifier of the caller is accessible at the communications device (104) by searching for an identifier of the caller in a memory of the communications device (104).

11. A communications device (104) according to claim 9 or claim 10, wherein an identifier of the caller is a name or other indicator of the caller of the calling device (102) stored in an address book of the communications device (104).

12. A communications device (104) according to any of claims 9 to 11, the communications device (104) being configured to allow a user of the communications device (104) to edit the notification prior to the notification being transmitted.

13. A communications device (104) according to any of claims 9 to 12, wherein the communications device (104) is a mobile cellular device.

## Patentansprüche

1. Kommunikationsverfahren zwischen einem anrufenden Gerät (102) und einem angerufenen Gerät (104) über ein Kommunikationsnetz, wobei das Verfahren aufweist:
während eines Versuchs von einem ein anrufendes Gerät (102) verwendenden Anrufer, einen ein angerufenes Gerät (104) verwendenden Angerufenen über ein Kommunikationsnetz anzurufen, und bevor der Angerufene den Anruf entgegennimmt, bestimmt das angerufene Gerät (104), ob eine Kennzeichnung des das anrufende Gerät (102) verwendenden Anrufers am angerufenen Gerät (104) zugreifbar ist;
falls bestimmt wird, dass eine Kennzeichnung des das anrufende Gerät (102) verwendenden Anrufers anders als die Telefonnummer des anrufenden Geräts (102) am angerufenen Gerät (104) nicht zugreifbar ist, Übertragen einer Benachrichtigung vom angerufenen Gerät (104) zum anrufenden Gerät (102), die anzeigt, dass keine Kennzeichnung des Anrufers am angerufenen Gerät (104) zugreifbar ist;
**dadurch gekennzeichnet, dass** das angerufene Gerät (104) vor dem Übertragen der Benachrichtigung vom angerufenen Gerät (104) dem Angerufenen die Option zur Verfügung stellt, manuell zu entscheiden, ob die Benachrichtigung zu übertragen ist oder nicht, und eine Eingabe vom Angerufenen empfängt, ob die Benachrichtigung an das anrufende Gerät zu übertragen ist oder nicht.

2. Verfahren nach Anspruch 1, bei welchem das Bestimmen, ob eine Kennzeichnung des Anrufers am angerufenen Gerät (104) zugreifbar ist, ein Suchen nach einer Kennzeichnung des Anrufers in einem Speicher des angerufenen Geräts (104) aufweist.

3. Verfahren nach Anspruch 1 oder Anspruch 2, bei welchem die Benachrichtigung vom Angerufenen unter Verwendung des angerufenen Geräts (104) editierbar ist, bevor die Benachrichtigung übertragen wird.

4. Verfahren nach einem der Ansprüche 1 bis 3, aufweisend ein Empfangen einer vom anrufenden Gerät (102) nach dem Empfang der Benachrichtigung am anrufenden Gerät (102) übertragenen Mitteilung am angerufenen Gerät (104).

5. Verfahren nach Anspruch 4, aufweisend ein Anzeigen der Mitteilung auf einer Anzeige des angerufenen Geräts (104).

6. Verfahren nach Anspruch 4 oder Anspruch 5, bei welchem die Mitteilung zum angerufenen Gerät (104) vom anrufenden Gerät (102) automatisch als Reaktion auf die am anrufenden Gerät (102) empfangene Benachrichtigung übertragen wird.

7. Verfahren nach Anspruch 5 oder Anspruch 6, aufweisend ein Vorsehen einer Option für den Anrufer, auf dem anrufenden Gerät (102) die an das angerufene Gerät (104) zu übertragende Mitteilung einzugeben.

8. Computerprogramm mit Anweisungen derart, dass bei Ausführung des Computerprogramms auf einem Computergerät das Computergerät eingerichtet ist, ein Verfahren nach einem der Ansprüche 1 bis 7 auszuführen.

9. Kommunikationsgerät (104), das konfiguriert ist, um mit einem anrufenden Gerät (102) über ein Kommunikationsnetz zu kommunizieren, wobei das Kommunikationsgerät (104) ferner konfiguriert ist, um:
während eines Versuchs von einem ein anrufendes Gerät (102) verwendenden Anrufer, einen das Kommunikationsgerät (104) verwendenden Angerufenen über ein Kommunikationsnetz anzurufen, und bevor der Angerufene den Anruf entgegennimmt, zu bestimmen, ob eine Kennzeichnung des das anrufende Gerät (102) verwendenden Anrufers am Kommunikationsgerät (104) zugreifbar ist;
falls bestimmt wird, dass eine Kennzeichnung des das anrufende Gerät (102) verwendenden Anrufers anders als die Telefonnummer des anrufenden Geräts (102) am Kommunikationsgerät (104) nicht zugreifbar ist, vom Kommunikationsgerät (104) an das anrufende Gerät (102) eine Benachrichtigung zu übertragen, die anzeigt, dass keine Kennzeichnung des Anrufers am Kommunikationsgerät (104) zugreifbar ist;
**dadurch gekennzeichnet, dass** das Kommunikationsgerät (104) ferner konfiguriert ist, um
vor dem Übertragen der Benachrichtigung vom angerufenen Gerät (104) dem Angerufenen die Option zur Verfügung zu stellen, manuell zu entscheiden, ob die Benachrichtigung zu übertragen ist oder nicht, und eine Eingabe vom Angerufenen zu empfangen, ob die Benachrichtigung an das anrufende Gerät zu übertragen ist oder nicht.

10. Kommunikationsgerät (104) nach Anspruch 9, wobei das Kommunikationsgerät (104) konfiguriert ist, um zu bestimmen, ob eine Kennzeichnung des Anrufers am Kommunikationsgerät (104) zugreifbar ist, indem nach einer Kennzeichnung des Anrufers in einem Speicher des Kommunikationsgeräts (104) gesucht wird.

11. Kommunikationsgerät (104) nach Anspruch 9 oder Anspruch 10, wobei eine Kennzeichnung des Anrufers ein Name oder ein anderer Indikator des Anrufers des anrufenden Geräts (102) ist, der in einem Adressbuch des Kommunikationsgeräts (104) gespeichert ist.

12. Kommunikationsgerät (104) nach einem der Ansprüche 9 bis 11, wobei das Kommunikationsgerät (104) konfiguriert ist, um einem Benutzer des Kommunikationsgeräts (104) zu ermöglichen, die Benachrichtigung zu editieren, bevor die Benachrichtigung übertragen wird.

13. Kommunikationsgerät (104) nach einem der Ansprüche 9 bis 12, wobei das Kommunikationsgerät (104) ein Mobilfunkgerät ist.

## Revendications

1. Procédé de communication entre un dispositif appelant (102) et un dispositif appelé (104) sur un réseau de communication, le procédé consistant à :
lors d'une tentative par un appelant utilisant un dispositif appelant (102) d'appeler un appelé utilisant un dispositif appelé (104) sur un réseau de communication et avant que l'appelé ne réponde à l'appel, déterminer par le dispositif appelé (104) si un identifiant de l'appelant utilisant le dispositif appelant (102) est accessible au dispositif appelé (104) ;
s'il est déterminé qu'un identifiant de l'appelant utilisant le dispositif appelant (102), autre que le numéro de téléphone du dispositif appelant (102), n'est pas accessible au dispositif appelé (104), transmettre du dispositif appelé (104) au dispositif appelant (102) une notification indiquant qu'aucun identifiant de l'appelant n'est accessible au dispositif appelé (104),
**caractérisé par le fait qu'**avant de transmettre la notification provenant du dispositif appelé (104), le dispositif appelé (104) fournit à l'appelé l'option de décider manuellement s'il faut transmettre ou non la notification et reçoit une entrée de l'appelé indiquant s'il faut transmettre ou non la notification au dispositif appelant.

2. Procédé selon la revendication 1, dans lequel la détermination de si un identifiant de l'appelant est accessible au dispositif appelé (104) consiste à rechercher un identifiant de l'appelant dans une mémoire du dispositif appelé (104).

3. Procédé selon la revendication 1 ou 2, dans lequel la notification peut être éditée par l'appelé utilisant le dispositif appelé (104) avant que la notification ne soit transmise.

4. Procédé selon l'une quelconque des revendications 1 à 3, consistant à recevoir au niveau du dispositif appelé (104) un message transmis par le dispositif appelant (102) suite à la réception de la notification au niveau du dispositif appelant (102).

5. Procédé selon la revendication 4, consistant à afficher le message sur un affichage du dispositif appelé (104).

6. Procédé selon la revendication 4 ou 5, dans lequel le message transmis au dispositif appelé (104) est transmis automatiquement par le dispositif appelant (102) en réponse à la notification reçue au niveau du dispositif appelant (102).

7. Procédé selon la revendication 5 ou 6, consistant à fournir une option pour permettre à l'appelant d'entrer, sur le dispositif appelant (102), le message à transmettre au dispositif appelé (104).

8. Programme informatique comprenant des instructions telles que lorsque le programme informatique est exécuté sur un dispositif informatique, le dispositif informatique est agencé pour effectuer un procédé selon l'une quelconque des revendications 1 à 7.

9. Dispositif de communication (104) configuré pour communiquer avec un dispositif appelant (102) sur un réseau de communication, le dispositif de communication (104) étant en outre configuré pour :
lors d'une tentative par un appelant utilisant un dispositif appelant (102) d'appeler un appelé utilisant le dispositif de communication (104) sur un réseau de communication et avant que l'appelé ne réponde à l'appel, déterminer si un identifiant de l'appelant utilisant le dispositif appelant (102) est accessible au dispositif de communication (104) ;
s'il est déterminé qu'un identifiant de l'appelant utilisant le dispositif appelant (102), autre que le numéro de téléphone du dispositif appelant (102), n'est pas accessible au dispositif de communication (104), transmettre du dispositif de communication (104) au dispositif appelant (102) une notification indiquant qu'aucun identifiant de l'appelant n'est accessible au dispositif de communication (104),
caractérisé en que le dispositif de communication est en outre configuré, avant de transmettre la notification provenant du dispositif appelé (104), pour fournir à l'appelé l'option de décider manuellement s'il faut transmettre ou non la notification et pour recevoir une entrée de l'appelé indiquant s'il faut transmettre ou non la notification au dispositif appelant.

10. Dispositif de communication (104) selon la revendication 9, le dispositif de communication (104) étant configuré pour déterminer si un identifiant de l'appelant est accessible au dispositif de communication (104) en recherchant un identifiant de l'appelant dans une mémoire du dispositif de communication (104).

11. Dispositif de communication (104) selon la revendication 9 ou 10, dans lequel un identifiant de l'appelant est un nom ou autre indicateur de l'appelant du dispositif appelant (102) qui est stocké dans un carnet d'adresses du dispositif de communication (104).

12. Dispositif de communication (104) selon l'une quelconque des revendications 9 à 11, le dispositif de communication (104) étant configuré pour permettre à un utilisateur du dispositif de communication (104) d'éditer la notification avant que la notification ne soit transmise.

13. Dispositif de communication (104) selon l'une quelconque des revendications 9 à 12, dans lequel le dispositif de communication (104) est un dispositif cellulaire mobile.
